# EUROPEAN PATENT APPLICATION

(11) **EP 4 447 557 A1**
(43) Date of publication of application: **16.10.2024**
(21) Application number: 21967093.2
(22) Date of filing: 06.12.2021
(51) Int. Cl.: H04W 40/20, H04W 40/34

(54) **COMMUNICATION SYSTEM, MOBILE TERMINAL DEVICE, AND PROGRAM**

(71) Applicant: MITSUBISHI ELECTRIC CORPORATION, Chiyoda-ku Tokyo 100-8310 (JP)
(72) Inventor: IWAYAMA Naofumi, Tokyo 100-8310 (JP); MOCHIZUKI, Mitsuru, Tokyo 100-8310 (JP); SHIMODA, Tadahiro, Tokyo 100-8310 (JP); HASEGAWA, Fumiki, Tokyo 100-8310 (JP); MAKINO, Shinya, Tokyo 100-8310 (JP); ANDO, Nobuhiko, Tokyo 100-8310 (JP); TOKUDA, Tatsuya, Tokyo 100-8310 (JP); NAKAZAWA, Masayuki, Tokyo 100-8310 (JP); ITO, Masuo, Tokyo 100-8310 (JP)
(74) Representative: Pfenning, Meinig & Partner mbB
(86) International application number: PCT/JP2021/044759
(87) International publication number: WO 2023/105587

(57) **Abstract**

A U2N relay (110#2) transmits a first sidelink discovery message containing base-station identification information of a base station (130) when the U2N relay (110#2) is in communication range with the base station (130). When a U2U relay (110#3) is in communication range with the U2N relay (110#2) and not in communication range with the base station (130), the U2U relay (110#3) receives the first sidelink discovery message and transmits a second sidelink discovery message containing mobile-terminal-device identification information of the U2N relay (110#2) and the base-station identification information. When a remote UE (110#1) is in communication range with the U2U relay (110#3) and no in communication range with the base station (130) and the U2N relay (110#2), the remote UE (110#1) receives the second sidelink discovery message and establishes communication path to communicate with the base station (130) via the U2U relay (110#3) and the U2N relay (110#2).

## Description

### TECHNICAL FIELD

The disclosure relates to a communications system, a mobile terminal device, and a program.

### BACKGROUND ART

The 3rd Generation Partnership Project (3GPP), which is a standardization body for mobile communications systems, is considering supporting services or applications using sidelink (SL) communications (also known as PC5 communications) in the Evolved Packet System (EPS) and the 5G Core system of fifth-generation (5G) wireless access systems. In SL communications, communication takes place between terminals. Examples of services using SL communications include vehicle-to-everything (V2X) services and proximity services. In SL communications, not only direct communication between terminals has been proposed, but also communication between a mobile terminal device (hereinafter referred to as User Equipment (UE)) and a Network (NW) via relays (for example, refers to NPL 1).

In the following, a relay between a UE and a NW may be referred to as a UE-to-NW relay or a UE-NW relay. The UE implementing a relay between a UE and a NW may be referred to as "U2N relay."

A relay between a UE and another UE may be referred to as "UE-to-UE relay." The UE implementing a relay between a UE and another UE may be referred to as "U2U relay."

### BACKGROUND ART

### PRIOR ART REFERENCE

### PATENT REFERENCE

Non-Patent Literature 1: 3GPP TR 38.836 V17.0.0

### SUMMARY OF THE INVENTION

### PROBLEM TO BE SOLVED BY THE INVENTION

For U2N relays in 5G systems, only a single-hop scheme with only one relay has been proposed, and a multi-hop scheme involving multiple relays has not been disclosed.

Accordingly, an object of one or more aspects of the disclosure is to enable a multi-hop relay scheme that combines one U2N relay with at least one U2U relay.

### MEANS OF SOLVING THE PROBLEM

A communications system according to an aspect of the disclosure is compatible with the fifth-generation mobile communication system standards and includes: a base station; a first mobile terminal device; a second mobile terminal device; and a third mobile terminal device, wherein, when the first mobile terminal device is in communication range with the base station, the first mobile terminal device transmits a first sidelink discovery message being a sidelink discovery message including base-station identification information identifying the base station, when the second mobile terminal device is in communication range with the first mobile terminal device and not in communication range with the base station, the second mobile terminal device receives the first sidelink discovery message and, based on the first sidelink discovery message, transmits a second sidelink discovery message being a sidelink discovery message including the base station identification information and mobile-terminal-device identification information identifying the first mobile terminal device, and when the third mobile terminal device is in communication range with the second mobile terminal device and not in communication range with the base station and the first mobile terminal device, the third mobile terminal device receives the second sidelink discovery message and, based on the second sidelink discovery message, establishes a multi-hop relay communication path being a communication path for communicating with the base station via the second mobile terminal device and the first mobile terminal device.

A mobile terminal device according to an aspect of the disclosure includes: a communications unit compatible with the fifth-generation mobile communications system standards and configured to receive a first sidelink discovery message transmitted from another mobile terminal device in communication range with a base station, the first sidelink discovery message being a sidelink discovery message including base-station identification information identifying the base station; and a control unit configured to cause the communications unit to transmit a second sidelink discovery message based on the first sidelink discovery message when the mobile terminal device is within communication range with the another mobile terminal device and not in communication range with the base station, the second sidelink discovery message being a sidelink discovery message including the base-station identification information and mobile-terminal-device identification information identifying the another mobile terminal device.

A program according to an aspect of the disclosure causes a computer to function as: a communications unit compatible with the fifth-generation mobile communications system standards and configured to receive a first sidelink discovery message transmitted from another mobile terminal device in communication range with a base station, the first sidelink discovery message being a sidelink discovery message including base-station identification information identifying the base station; and a control unit configured to cause the communications unit to transmit a second sidelink discovery message based on the first sidelink discovery message when the mobile terminal device is within communication range with the another mobile terminal device and not in communication range with the base station, the second sidelink discovery message being a sidelink discovery message including the base-station identification information and mobile-terminal-device identification information identifying the another mobile terminal device.

### EFFECTS OF THE INVENTION

According to one or more aspects of the disclosure, a multi-hop relay scheme that combines one U2N relay with at least one U2U relay can be provided.

### BRIEF DESCRIPTION OF THE DRAWINGS

FIG. 1 is a block diagram schematically illustrating a configuration of a communications system according to first to third embodiments.
FIG. 2 is a block diagram schematically illustrating a configuration of a UE according to the first to third embodiments.
FIGS. 3A and 3B are block diagrams illustrating hardware configuration examples.
FIG. 4 is a block diagram schematically illustrating a configuration of a base station 130 according to the first to third embodiments.
FIG. 5 is a block diagram schematically illustrating a configuration of a 5GC unit.
FIG. 6 is a flowchart that outlines cell search to standby operation performed by a UE.
FIG. 7 is a schematic diagram illustrating an example cell configuration in NR.
FIG. 8 is a schematic diagram illustrating an example where a remote UE in direct communication with a base station switches the path to multi-hop relay communication via a U2N relay and a U2U relay.
FIG. 9 is a sequence diagram illustrating a path switch procedure in the first embodiment.
FIG. 10 is a schematic diagram illustrating an example where a remote UE in multi-hop relay communication with a base station via a U2N relay and a U2U relay switches the path to direct communication using a Uu interface.
FIG. 11 is a sequence diagram illustrating a path switch procedure in the second embodiment.
FIG. 12 is a schematic diagram illustrating an example of reducing the number of relay stages by path switching after a remote UE communicating with a base station via a U2U relay and a U2N relay approaches the U2N relay and thus is able to directly communicate with the U2N relay.
FIG. 13 is a sequence diagram illustrating a path switch procedure in the third embodiment.

### MODE FOR CARRYING OUT THE INVENTION

### FIRST EMBODIMENT

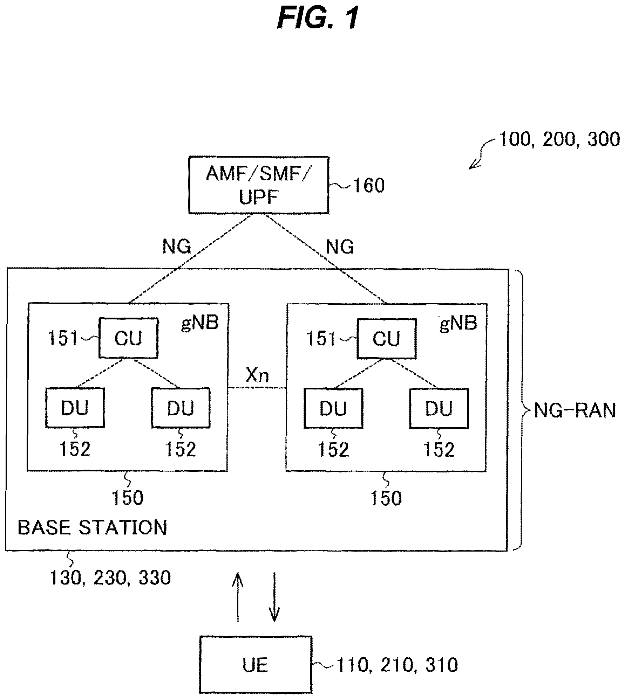

FIG. 1 is a block diagram schematically illustrating a configuration of a communications system 100 according to the first embodiment.

The communications system 100 is a 5G communications system as discussed in the 3GPP.

The communications system 100 includes UE 110, a base station 130, and a 5G Core (5GC) unit 160. The core network is referred to as 5GC.

The radio access network is referred to as Next Generation Radio Access Network (NG-RAN).

The UE 110 is capable of wireless communication with the base station 130, and transmits and receives signals via wireless communication.

If the control protocol for the UE 110, e.g., Radio Resource Control (RRC), the User Plane (may also be referred to as U-Plane) terminate at the base station 130, the NG-RAN will consist of at least one base station 130. Here, examples of the User Plane include the Service Data Adaptation Protocol (SDAP), the Packet Data Convergence Protocol (PDCP), the Radio Link Control (RLC), the Medium Access Control (MAC), and the Physical layer (PHY).

The Radio Resource Control (RRC), which is the control protocol between the UE 110 and the base station 130, performs notification, paging, or RRC connection management. The statuses between the base station 130 and the UE 110 in RRC are RRC_IDLE, RRC_CONNECTED, and RRC_INACTIVE.

In RRC_IDLE, Public Land Mobile Network (PLMN) selection, System Information (SI) reporting, paging, cell reselection, and mobility are performed.

In RRC_CONNECTED, the UE 110 has an RRC connection and can transmit and receive data to and from networks. In RRC_CONNECTED, handover (HO) or adjacent cell measurement is performed.

In RRC_INACTIVE, SI reporting, paging, cell reselection, or mobility is performed while the connection between the 5GC unit 160 and the base station 130 is maintained.

The base station 130 includes at least one NG-RAN NodeB (gNB) 150.

The gNB 150 may be divided into a Central Unit (CU) 151 and a Distributed Unit (DU) 152.

The gNB 150 includes one CU 151 and at least one DU 152.

The CU 218 is connected to the DU 219 via an F1 interface to communicate control information or user data between the CU 151 and the DU 152.

The gNB 150 is connected to the 5GC unit 160 via an NG interface to communicate control information or user data between the gNB150 and the 5GC unit 160.

The 5GC unit 160 includes any one of the Access and Mobility Management Function (AMF), the Session Management Function (SMF), and the User Plane Function (UPF), or includes the AMF, SMF, and UPF.

The NG interface is a generic term that refers to an N2 interface between the gNB 150 and the AMF, an N3 interface between the gNB 150 and the UPF, an N11 interface between the AMF and the SMF, and an N4 interface between the UPF and the SMF.

Multiple 5GC units 160 may be connected to one gNB 150. The gNBs 150 are connected by Xn interfaces, and control information or user data is communicated between the gNBs 150.

The 5GC unit 160 is a higher-order device, specifically, a higher-order node, that distributes paging signals to at least one base station 130.

The 5GC unit 160 also performs mobility control in a standby state.

The 5GC unit 160 manages the tracking area list when the UE 110 is in a standby state, an inactive state, and an active state.

The 5GC unit 160 initiates the paging protocol by transmitting a paging message to the cells belonging to the tracking area in which the UE 110 is registered.

The base station 130 may consist of at least one cell. When one base station 130 consists of multiple cells, every cell is configured to communicate with the UE 110.

The 5G communications system 100 may have the Unified Data Management (UDM) function or the Policy Control Function (PCF). At least one of the UDM and the PCF may be provided in the 5GC unit 160.

The 5G communications system 100 may be provided with the Location Management Function (LMF). The LMF may be connected to the base station 130 via the AMF.

The 5G communications system 100 may be provided with the Non-3GPP Interworking function (N3IWF). The N3IWF may terminate the Access Network (AN) between the UE in non-3GPP access to the UE 110.

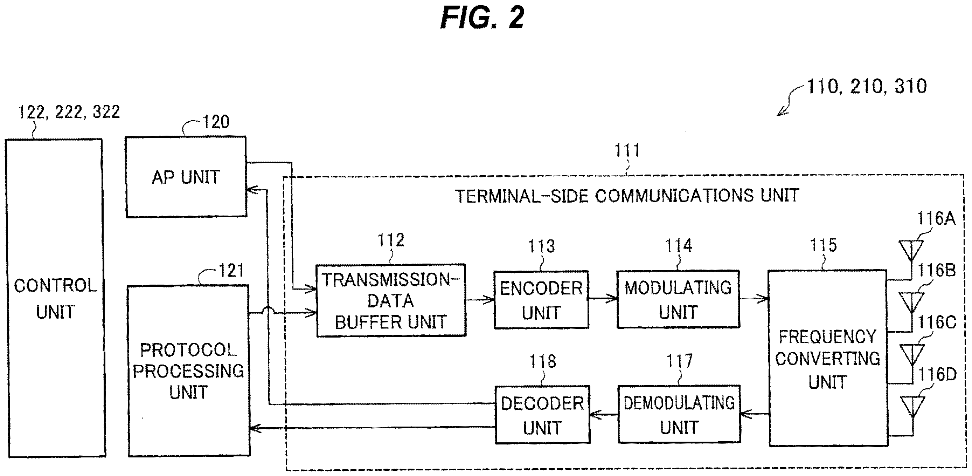

FIG. 2 is a block diagram schematically illustrating a configuration of the UE 110.

The UE 110 includes a terminal-side communications unit 111, an application (AP) unit 120, a protocol processing unit 121, and a control unit 122.

The terminal-side communications unit 111 is a communications unit including a transmission-data buffer unit 112, an encoder unit 113, a modulating unit 114, a frequency converting unit 115, antennas 116A to 116D, a demodulating unit 117, and a decoder unit 118.

First, the transmission process by the UE 110 will be explained.

The control data from the protocol processing unit 121 or the user data from the AP unit 120 is stored in the transmission-data buffer unit 112.

The data stored in the transmission-data buffer unit 112 is sent to the encoder unit 113.

The encoder unit 113 performs encoding processing such as error correction on the data. Depending on the data, the encoder unit 113 may directly output the data from transmission-data buffer unit 112 to the modulating unit 114 without the encoding processing.

The modulating unit 114 performs modulation processing on the data from the encoder unit 113. The modulating unit 114 may perform precoding in multi-input multi-output (MIMO). The modulating unit 114 converts the modulated data into a baseband signal and then gives the baseband signal to the frequency converting unit 115.

The frequency converting unit 115 converts the baseband signal from the modulating unit 114 into a transmission signal at radio transmission frequency.

The transmission signal is then transmitted to a destination by the antennas 116A to 116D.

In FIG. 2, four antennas 116A to 116D are provided, but the number of antennas is not limited to four.

Next, the reception process by the UE 110 will be explained.

The antennas 116A to 116D receive a radio signal from a source as a reception signal.

The frequency converting unit 115 converts the reception signal at radio reception frequency to a baseband signal. The frequency converting unit 115 then sends the baseband signal to the demodulating unit 117.

The demodulating unit 117 performs demodulation processing on the baseband signal from the frequency converting unit 115. The demodulating unit 117 may also perform weight calculation and multiplication processing. The demodulated data is sent to the decoder unit 118.

The decoder unit 118 performs decoding processing such as error correction on the data from the demodulating unit 117. Of the decoded data, control data is sent to the protocol processing unit 121, and user data is sent to the AP unit 120.

The above series of processing by the UE 110 is controlled by the control unit 122. Although not illustrated, the control unit 122 is connected to the terminal-side communications unit 111, the AP unit 120, and the protocol processing unit 121.

The number of antennas used by the UE 110 for transmission and reception may be the same or different.

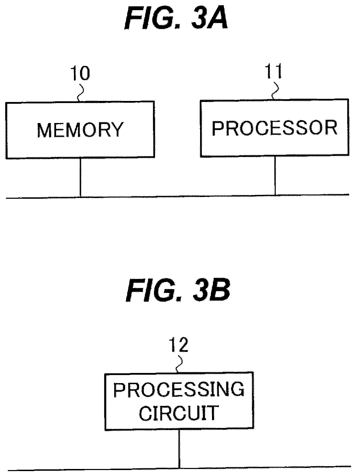

Some or all of the AP unit 120, the protocol processing unit 121, and the control unit 122 described above can be implemented by, for example, a memory 10 and a processor 11 such as a central processing unit (CPU) that executes a program stored in the memory 10, as illustrated in FIG. 3A. Such programs may be provided over a network or may be recorded and provided on a recording medium. That is, such programs may be provided, for example, as a program product.

Some or all of the AP unit 120, the protocol processing unit 121, and the control unit 122 can also be implemented by, for example, a single circuit, a composite circuit, a processor operated by a program, a parallel processor operated by a program, a processing circuit 12 such as an application specific integrated circuit (ASIC) or a field programmable gate array (FPGA), as illustrated in FIG. 3B.

As described above, the AP unit 120, the protocol processing unit 121, and the control unit 122 can be implemented by processing circuitry.

The terminal-side communications unit 111 can be implemented by a wireless communication interface, which is an interface for wireless communication.

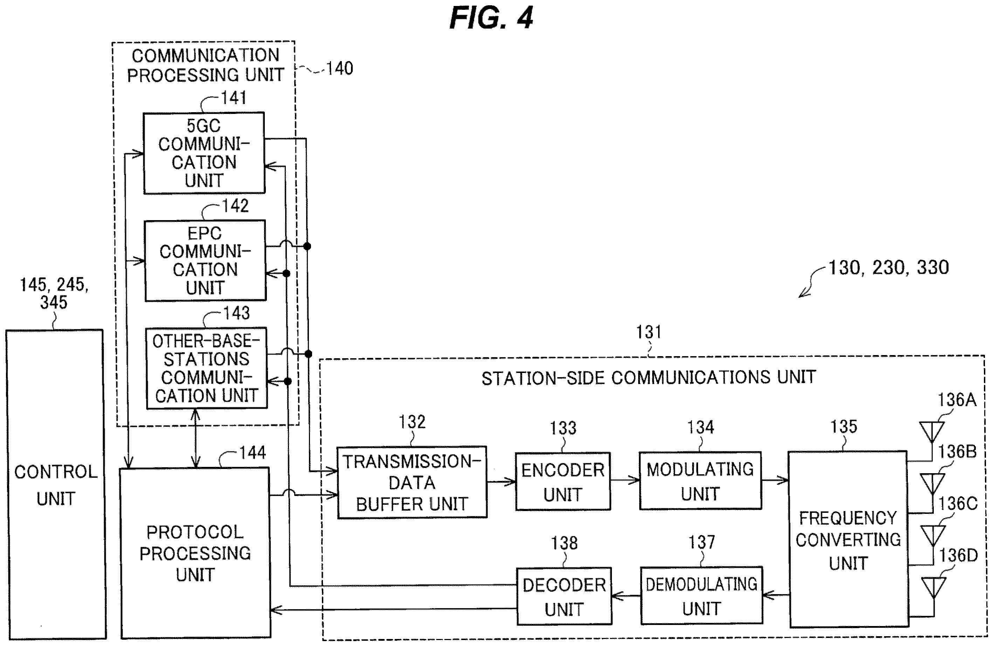

FIG. 4 is a block diagram schematically illustrating a configuration of the base station 130.

The base station 130 includes a station-side communications unit 131, a communication processing unit 140, a protocol processing unit 144, and a control unit 145.

The station-side communications unit 131 includes a transmission-data buffer unit 132, an encoder unit 133, a modulating unit 134, a frequency converting unit 135, antennas 136A to 136D, a demodulating unit 137, and a decoder unit 138.

The communication processing unit 140 includes a 5GC communication unit 141 that transmits and receives data to and from the 5GC such as the 5GC unit 160, an EPC communication unit 142 that transmits and receives data to and from the Evolved Packet Core (EPC), such as the Mobility Management Entity (MME), and an other-base-stations communication unit 143 that transmits and receives data to and from other base stations. The 5GC communication unit 141, the EPC communication unit 142, and the other-base-stations communication unit 143 each passes information to and from the protocol processing unit 144.

The transmission process by the base station 130 will now be explained.

The control data from the protocol processing unit 144 or the user data or control data from the 5GC communication unit 141, the EPC communication unit 142, or the other-base-stations communication unit 143 is stored in the transmission-data buffer unit 132.

The data stored in the transmission-data buffer unit 132 is sent to the encoder unit 133.

The encoder unit 133 performs an encoding process such as error correction on the received data. Depending on the data, the encoder unit 133 may directly output the data from transmission-data buffer unit 132 to the modulating unit 134 without encoding processing.

The modulating unit 134 performs modulation processing on the data from the encoder unit 133. The modulating unit 134 may perform precoding in MIMO. The modulating unit 134 converts the modulated data into a baseband signal and then gives the baseband signal to the frequency converting unit 135.

The frequency converting unit 135 converts the baseband signal from the modulating unit 134 into a transmission signal at a radio transmission frequency.

The antennas 136A to 136D then transmit the transmission signal to a destination.

In FIG. 4, four antennas 136A to 136D are provided, but the number of antennas is not limited to four.

The reception process by the base station 130 will now be explained.

The antennas 136A to 136D receive a radio signal from a source as a reception signal.

The frequency converting unit 135 converts the reception signal at the radio reception frequency to a baseband signal. The frequency converting unit 135 then sends the baseband signal to the demodulating unit 137.

The demodulating unit 137 performs demodulation processing on the baseband signal from the frequency converting unit 135. The demodulated data is sent to the decoder unit 138.

The decoder unit 138 performs decoding processing such as error correction on the data from the demodulating unit 137. Of the decoded data, control data is sent to the protocol processing unit 144, the 5GC communication unit 141, the EPC communication unit 142, or the other-base-stations communication unit 143, and user data is sent to the 5GC communication unit 141, the EPC communication unit 142, or the other-base-stations communication unit 143.

The above series of processing by the base station 130 is controlled by the control unit 145. Although not illustrated, the control unit 145 is connected to the station-side communications unit 131, the communication processing unit 140, and the protocol processing unit 144.

The number of antennas used by the base station 130 for transmission and reception may be the same or different.

The number of antennas in the UE 110 and the number of antennas in the base station 130 may be the same or different.

Some or all of the communication processing unit 140, the protocol processing unit 144, and the control unit 145 described above can be implemented by, for example, a memory 10 and a processor 11 such as a CPU that executes a program stored in the memory 10, as illustrated in FIG. 3A. Such programs may be provided over a network or may be recorded and provided on a recording medium. That is, such programs may be provided, for example, as a program product.

Some or all of the communication processing unit 140, the protocol processing unit 144, and the control unit 145 can also be implemented by, for example, a single circuit, a composite circuit, a processor operated by a program, a parallel processor operated by a program, a processing circuit 12 such as an application specific integrated circuit (ASIC) or a field programmable gate array (FPGA), as illustrated in FIG. 3B.

As described above, the communication processing unit 140, the protocol processing unit 144, and the control unit 145 can be implemented by processing circuitry.

The station-side communications unit 131 can be implemented by a wireless communication interface, which is an interface for wireless communication.

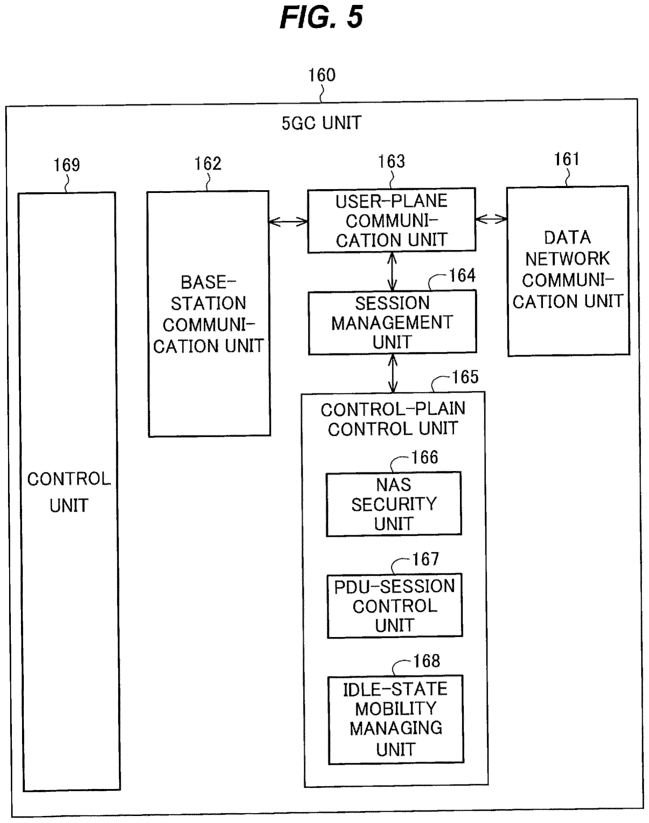

FIG. 5 is a block diagram schematically illustrating a configuration of the 5GC unit 160.

FIG. 5 illustrates the case where the 5GC unit 160 illustrated in FIG. 1 includes the configurations AMF, SMF, and UPF.

The 5GC unit 160 includes a Data Network communication unit 161, a base-station communication unit 162, a user-plane communication unit 163, a session management unit 164, a control-plane control unit 165, and a control unit 169.

The Data Network communication unit 161 transmits and receives data to and from the 5GC unit 160 and the Data Network.

The base-station communication unit 162 transmits and receives data to and from the 5GC unit 160 and the base station 130 via an NG interface.

When the data received from the Data Network is user data, the user data is sent from the Data Network communication unit 161 to the base-station communication unit 162 via the user-plane communication unit 163, and from the base-station communication unit 162 to the base station 130.

When the data received from base station 130 is user data, the user data is sent from the base-station communication unit 162 to the Data Network communication unit 161 via the user-plane communication unit 163, and from the Data Network communication unit 161 to the Data Network.

When the data received from the Data Network is control data, the control data is sent from the Data Network communication unit 161 to the session management unit 164 via the user-plane communication unit 163.

The session management unit 164 sends the control data to the control-plane control unit 165.

When the data received from the base station 130 is control data, the control data is sent from the base-station communication unit 162 to the control-plane control unit 165. The control-plane control unit 165 sends the control data to the session management unit 164.

The control-plane control unit 165 executes comprehensive processing for the control plane (hereinafter also referred to as "C-Plane").

The control-plane control unit 165 includes a Non-Access Stratum (NAS) security unit 166, a PDU-session control unit 167, and an idle-state mobility managing unit 168.

The NAS security unit 166 is responsible for NAS message security, etc.

The PDU-session control unit 167 manages PDU sessions between the UE 110 and the 5GC unit 160.

The idle-state mobility managing unit 168 manages standby state mobility, generates and controls paging signals during the standby state, adds, deletes, updates, and searches tracking areas of one or more sets of UE 110 under the control, and manages a tracking area list. The standby state is also referred to as "idle state," "RRC_IDLE state," or simply "idle."

The series of processes in the 5GC unit 160 is controlled by the control unit 169. Although not illustrated, the control unit 169 is connected to the Data Network communication unit 161, the base-station communication unit 162, the user-plane communication unit 163, the session management unit 164, and the control-plane control unit 165.

Some or all of the Data Network communication unit 161, the base-station communication unit 162, the user-plane communication unit 163, the session management unit 164, the control-plane control unit 165, and the control unit 169 can be implemented by, for example, a memory 10 and a processor 11 such as a CPU that executes a program stored in the memory 10, as illustrated in FIG. 3A. Such programs may be provided over a network or may be recorded and provided on a recording medium. That is, such programs may be provided, for example, as a program product.

Some or all of the Data Network communication unit 161, the base-station communication unit 162, the user-plane communication unit 163, the session management unit 164, the control-plane control unit 165, and the control unit 169 can also be implemented by, for example, a single circuit, a composite circuit, a processor ran by a program, a parallel processor ran by a program, a processing circuit 12 such as an ASIC or an FPGA, as illustrated in FIG. 3B.

As described above, the Data Network communication unit 161, the base-station communication unit 162, the user-plane communication unit 163, the session management unit 164, the control-plane control unit 165, and the control unit 169 can be implemented by processing circuitry.

Next, an example of a cell search method in the communications system 100 will be explained.

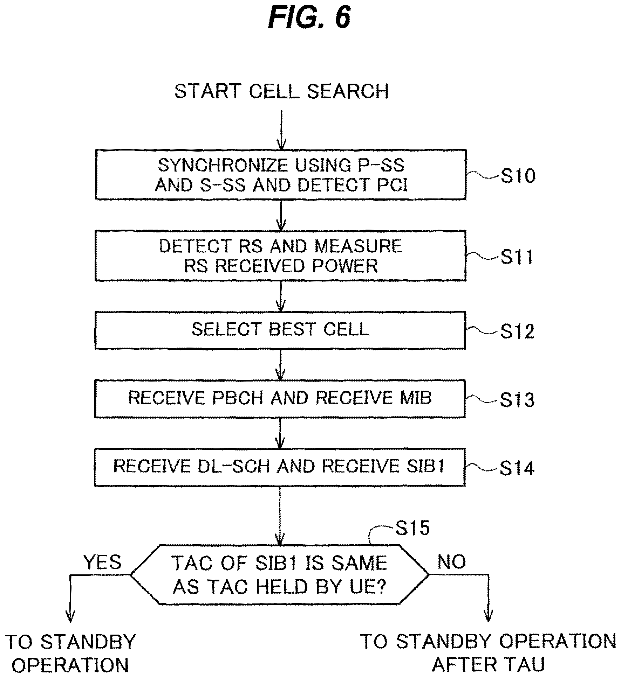

FIG. 6 is a flowchart that outlines the cell search to standby operation performed by the UE 110.

When the UE 110 starts cell search, it synchronizes the slot timing and the frame timing using a first synchronization signal (P-SS) and a second synchronization signal (S-SS) transmitted from surrounding base stations 130 (step S10). Here, P-SS and S-SS are collectively referred to as synchronization signals. The synchronization signals are assigned a synchronization code that corresponds one-to-one to the PCI assigned to each cell. A total of 504 different PCIs is being considered. The UE 110 establishes synchronization using the 504 PCIs and specifies the PCIs of the cells that have been synchronized.

Next, the UE 110 detects a cell-specific reference signal, which is a reference signal (RS) transmitted by the base station 130 for each synchronized cell, and measures the reference signal received power (RSRP), which is the received power of the RS (step S11). The RS uses a code that corresponds one-to-one with the PCI. A cell can be separated from other cells through correlation with the code. By deriving the code for the RS of the separated cell from the PCI specified in step S10, the RS can be detected, and the RSRP of the RS can be measured.

Next, the UE 110 selects the cell having the best RS reception quality, e.g., the cell having the highest RSRP of the RS, or the best cell, from the one or more cells detected before and at step S11 (step S12). In addition to the best cell, the UE 110 may also select the best beam, which is the beam having the highest RSRP.

Next, the UE 110 receives the Physical Broadcast Channel (PBCH) of the best cell and obtains notification information via the Broadcast Control Channel (BCCH). The Master Information Block (MIB) containing cell configuration information is mapped to the BCCH on the PBCH. Therefore, by receiving the PBCH and obtaining the BCCH, the MIB is obtained (step S13). MIB information includes, for example, the downlink (DL) system bandwidth, the number of transmission antennas, and the System Frame Number (SFN). The system bandwidth is also known as the transmission bandwidth setting (dl-bandwidth).

The UE 110 may also obtain beam information, e.g., a beam identifier, in step S13. In addition, the UE 110 may obtain scheduling information for the Remaining Minimum SI (RMSI) in step S13.

Next, on the basis of the cell configuration information in the MIB, the UE 110 receives the Downlink Shared Channel (DL-SCH), which is the downlink shared channel for the cell, to obtain the System Information Block (SIB) 1 in the BCCH (step S14). The SIB1 contains information about access to the cell, information about cell selection, and scheduling information for other SIBs, or SIBk (k is an integer of k≥2). The SIB1 includes the Tracking Area Code (TAC). The TAC is the code number of a tracking area.

The UE 110 may receive the RMSI in step S14.

Next, the UE 110 compares the TAC of the SIB1 received in step S14 with the TAC portions of the Tracking Area Identities (TAIs), which are tracking area identifiers in the tracking area list already held by the UE 110. The tracking area list is also referred to as "TAI list." The TAI is identification information to identify the tracking area and consists of the Mobile Country Code (MCC), the Mobile Network Code (MNC), and the TAC. The MCC is a country code. The MNC is a network code.

If it is determined as a result of a comparison of the TACs that the TAC received in step S14 is the same as a TAC in the tracking area list (Yes in step S15), the UE 110 enters standby operation in the cell.

If it is determined as a result of a comparison of the TACs that the TAC received in step S14 is not included in the tracking area list (No in step S15), the UE 110 sends a request for a change of tracking area to the core network containing the MME, etc., via the cell to perform Tracking Area Update (TAU).

A core-network-side device, which is a device that constitutes the core network, updates the tracking area list on the basis of the identification number of the UE 110 (e.g., UE-ID) sent from the communication terminal together with a TAU request signal. The core-network-side device sends the updated tracking area list to the UE 110. The UE 110 rewrites and updates the TAC list held by the UE 110 on the basis of the received tracking area list. The UE 110 then enters standby operation in the cell.

The proliferation of smartphones and tablet-type terminal devices has led to an explosive increase in the traffic of cellular wireless communication, which has caused concerns about a worldwide shortage of wireless resources. In response, the use of small cells and the promotion of spatial separation are being considered to improve frequency utilization efficiency.

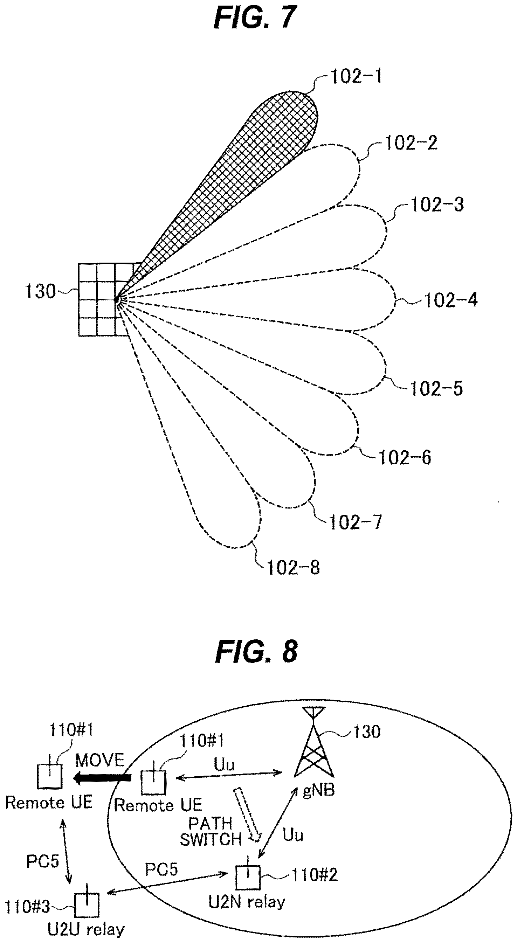

FIG. 7 is a schematic diagram illustrating an example cell configuration in NR.

For NR cells, the base station 130 forms a narrow beam and transmits it in different directions. In the example illustrated in FIG. 7, the base station 130 performs transmission and reception with the UE 110 by using a beam 102-1 at a given time. At another time, the base station 130 performs transmission and reception with the UE 110 by using a beam 102-2. Similarly, the base station 130 performs transmission and reception with the UE 110 by using one or more of beams 102-3 through 102-8. In this way, the base station 130 forms a cell having a wide range.

FIG. 7 illustrates an example where the number of beams used by the base station 130 is eight; alternatively, the number of beams may be any number besides eight. In the example illustrated in FIG. 7, the number of beams used simultaneously by the base station 130 is one; alternatively, multiple beams may be used simultaneously.

TS 36.300 V16.5.0 and TS 38.300 V16.5.0 defined by 3GPP supports Sidelink (SL) for Device-to-Device (D2D) or Vehicle-to-Vehicle (V2V) communication. The SL is specified by the PC5 interface.

The physical channels used for the SL will now be described.

The Physical Sidelink Broadcast Channel (PSBCH) carries information related to the system and synchronization and is transmitted from the UE 110.

The Physical Sidelink Discovery Channel (PSDCH) carries sidelink discovery messages from the UE 110.

The Physical Sidelink Control Channel (PSCCH) carries control information from the UE 110 for sidelink communication and V2X sidelink communication.

The Physical Sidelink Shared Channel (PSSCH) carries data from the UE 110 for sidelink communication and V2X sidelink communication.

The Physical Sidelink Feedback Channel (PSFCH) carries the Hybrid Automatic Repeat Request (HARQ) feedback over the sidelink from the UE 110 that received the PSSCH transmission to the UE 110 that transmitted the PSSCH.

Next, the transport channels used for the SL are described.

The Sidelink Broadcast Channel (SL-BCH) has a predetermined transport format and is mapped to the physical channel, PSBCH.

The Sidelink Discovery Channel (SL-DCH) supports periodic informational transmission having a fixed-size, predetermined format. The SL-DCH supports UE automatic resource selection and resource allocation scheduled by the gNB 150. With the UE automatic resource selection, there is a risk of collision, but when the UE 110 is allocated an individual resource by the gNB 150, no collision occurs. The SL-DCH supports HARQ combining but does not support HARQ feedback. The SL-DCH is mapped to the physical channel, PSDCH.

The Sidelink Shared Channel (SL-SCH) supports informational transmission. The SL-SCH supports the UE automatic resource selection and the resource allocation scheduled by the gNB 150. With the UE automatic resource selection, there is a risk of collision, but when the UE 110 is allocated an individual resource by the gNB 150, no collision occurs. The SL-SCH supports HARQ combining but does not support HARQ feedback. The SL-SCH supports dynamic link adaptation by varying the transmitted power, the modulation, or the coding. The SL-SCH is mapped to the physical channel, PSSCH.

Next, the logical channels used for the SL are described.

The Sidelink Broadcast Control Channel (SBCCH) is a channel for the sidelink to report sidelink system information from a UE 110 to another UE 110. The SBCCH is mapped to the transport channel, SL-BCH.

The Sidelink Traffic Channel (STCH) is a one-to-many sidelink traffic channel for transmitting user information from a UE 110 to another UE 110. The STCH is only used by UEs 110 having sidelink communication capability and UEs 110 having V2X sidelink communication capability. One-to-one communication between UEs 110 having the two sidelink communication capabilities is also implemented by the STCH. The STCH is mapped to the transport channel, SL-SCH.

The Sidelink Control Channel (SCCH) is a control channel for the sidelink to transmit control information from a UE 110 to another UE 110. The SCCH is mapped to the transport channel, SL-SCH.

The 3GPP is considering supports V2X communication in NR as well. While V2X communication in NR is being considered on the basis of the LTE and LTE-A systems, changes from and additions to the LTE and LTE-A systems have been made in the following points.

In LTE, SL communication only supports broadcast. With NR, it has been considered to provide SL communication that supports unicast and groupcast in addition to broadcast.

In unicast or groupcast communication, it has been considered to provide support for Acknowledgement (Ack) or Negative Acknowledgement (Nack), which are HARQ feedback, or Channel State Information (CSI) reporting.

In order to support unicast and groupcast in addition to broadcast in SL communication, it has been considered to support PC5-S signaling. For example, PC5-S signaling is implemented to establish a link for implementing PC5 communications, in other words, SL. Such a link is implemented at the V2X layer, and is also referred to as "layer 2 link."

In SL communication, support for RRC signaling has been considered. RRC signaling in SL communication is also referred to as "PC5 RRC signaling." For example, it has been proposed to notify UEs 110 performing PC5 communication between each other of the capability of the UEs 110 and the AS layer settings for V2X communication using the PC5 communication.

A U2U relay retains information on a list of UEs 110 in the vicinity that are available for sidelink communication through sidelink discovery messages. The U2U relay may append information about the UEs 110 that are available for communication to the sidelink discovery messages sent by the UEs 110.

A U2N relay ascertains the identifier (e.g., cell ID) of the base station 130 to which it is connected. The U2N relay may append cell ID information to the sidelink discovery messages transmitted by the UEs 110. If the U2N relay is in communication range of the U2U relay, and if the U2N relay transmits a sidelink discovery message with cell ID information, the U2U relay may transmit a sidelink discovery message by appending the cell ID information from the U2N relay to the information about UEs in communication range.

For example, a U2N relay 110#2 (tentatively referred to as "UE_A") illustrated in FIG. 8 transmits a sidelink discovery message {CELL('gNB')} as information about other UEs 110 or base stations with which the U2N relay 110#2 can communicate, and a U2U relay 110#3 (tentatively referred to as "UE_B") that receives the message transmits a sidelink discovery message {UE_A(CELL('gNB'))} as information about UEs 110 with which the U2U relay 110#3 can communicate. A remote UE 110#1 that receives the message from UE_B can recognize that it can connect to the gNB 150 of the base station 130 by using a multi-hop relay method with two relay stages via UE_B and UE_A.

If the remote UE 110#1 is in the RRC_IDLE state, in other words, not connected to any base station 130, the remote UE 110#1 receives the BCH to obtain system information and then performs random access to attempt direct connection to a base station 130. If direct communication to a base station 130 is not possible, the remote UE 110#1 attempts to connect to a base station 130 via the surrounding relay UEs 110 by transmitting a sidelink discovery message if sidelink communication is allowed according to the parameters for sidelink communication set in advance in the remote UE 110#1 or set by instructions from a base station 130 to which connection was made previously. If the remote UE 110#1 finds multiple candidate paths to the base station 130, it may select a path in consideration of the radio wave strength with the relay UE 110 with which direct sidelink communication is established or a path having the least number of relay stages to the base station 130.

In the following, the U2N relay is also referred to as "first mobile terminal device, "the U2U relay as "second mobile terminal device," and the remote UE as "third mobile terminal device."

A communication path via multiple relays is also referred to as "multi-hop relay communication path," while a communication path via a single relay is also referred to as "single-hop relay communication path."

FIG. 8 is a schematic diagram illustrating an example where a remote UE 110#1 in direct communication with a base station 130#1 switches the path to multi-hop relay communication via a U2N relay 110#2 and a U2U relay 110#3.

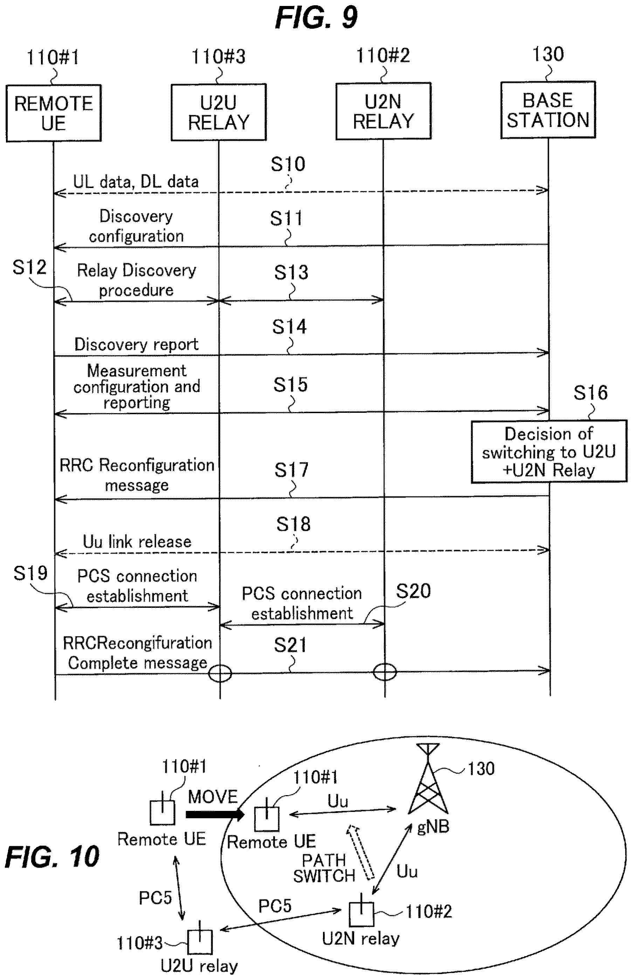

FIG. 9 is a sequence diagram illustrating the path switch procedure in the example illustrated in FIG. 8.

First, the AP unit 120 of the remote UE 110#1 is in a state capable of communicating with the base station 130 via the terminal-side communications unit 111, while in direct connection with the base station 130 via a Uu interface (step S10). Here, the 5GC communication unit 141 of the base station 130 communicates with the remote UE 110#1 via the station-side communication unit 131.

Next, the control unit 145 of the base station 130 instructs the remote UE 110#1 to perform sidelink discovery via the protocol processing unit 144 and the station-side communication unit 131 periodically or by being triggered by the state of the communication with the remote UE 110#1, e.g., a decrease in received power (step S11) .

Next, the control unit 122 of the remote UE 110#1 performs sidelink discovery to search for a nearby relay UE 110 via the protocol processing unit 121 and the terminal-side communications unit 111 (step S12). It is assumed that the control unit 122 of the nearby U2U relay 110#3 has performed sidelink discovery in advance via the protocol processing unit 121 and the terminal-side communications unit 111 (step S13) and has already found the U2N relay 110#2. In such a case, the control unit 122 of the remote UE 110#1 detects, via the protocol processing unit 121 and the terminal-side communications unit 111, the fact that the U2N relay 110#2 is outside direct communication range of the remote UE 110#1, but that communication can be established with the U2N relay 110#2 and the base station 130 connected to the U2N relay 110#2 via the U2U relay 110#3 with a sidelink discovery message from the U2U relay 110#3.

The control unit 122 of the remote UE 110#1 then reports the path information obtained in the above sidelink discovery to the base station 130 via the protocol processing unit 121 and the terminal-side communications unit 111 (step S14). In this way, the control unit 145 of the base station 130 ascertains the presence of the above communication path as an alternative path.

Next, the control unit 145 of the base station 130 instructs the remote UE 110#1, via the protocol processing unit 144 and the station-side communications unit 131, to measure the communication quality with the base station 130, e.g., RSRP, and the reception state of radio waves from the U2U relay, e.g., SL-RSRP; and the control unit 122 of the remote UE 110#1 reports the result of the measurement, or a communication quality report, to the base station 130 via the protocol processing unit 121 and the terminal-side communications unit 111 (step S15).

Next, the control unit 145 of the base station 130 receives the communication quality report via the protocol processing unit 144 and the station-side communications unit 131, checks the communication quality report, and if the communication quality deteriorates, determines to switch the path to the path via the relays 110#3 and 110#2 in the above communication path (step S16). When the value indicated in the communication quality report exceeds or falls below a predetermined threshold, it should be determined that the communication quality has deteriorated.

Next, the control unit 145 of the base station 130 transmits an RRC Reconfiguration message to the remote UE 110#1 via the protocol processing unit 144 and the station-side communications unit 131 to instruct path switching to the path through the relays 110#3 and 110#2 (step S17).

To avoid data loss during path switch, on the base station 130 side, data transmission is interrupted after the control unit 145 determines to switch the path, and on the remote UE 110#1 side, the control unit 122 interrupts data transmission after receiving the RRC Reconfiguration message (step S18). At this time, data in transmission and transmission data newly requested from upper layers are buffered and their transmission is suspended.

The control unit 122 of the remote UE 110#1 then transmits a direct communication request, which is a request for sidelink communication, to the U2U relay 110#3 via the protocol processing unit 121 and the terminal-side communications unit 111 to request communications with the base station 130 via the U2U relay 110#3 and the U2N relay 110#2 and establishes sidelink communication (step S19).

At this time, if sidelink communication is not established between the U2U relay 110#3 and the U2N relay 110#2, the control unit 122 of the U2U relay 110#3 transmits a direct communication request to the U2N relay 110#2 via the protocol processing unit 121 and the terminal-side communications unit 111 to establish sidelink communication (step S20). The old path (in this example, the Uu interface connection) may be released before the new path is established.

As described above, the new communication path via the relays 110#3 and 110#2 is established, and the control unit 122 of the remote UE 110#1 transmits an RRC Reconfiguration Complete message to the base station 130 through the new path via the protocol processing unit 121 and terminal-side communications unit 111 (step S21). At this time, if the control unit 122 of a remote UE#1 still retains the Uu interface with the base station 130, this Uu interface may be released, if not needed. After the RRC Reconfiguration Complete message is transmitted, the data transmission that was interrupted at the base station 130 and the remote UE 110#1 in step S18 is resumed using the new communication path.

Referring to FIGS. 8 and 9, in the communications system 100 compatible with the standard of the fifth-generation mobile communications system, the U2N relay 110#2 transmits a first sidelink discovery message, which is a sidelink discovery message containing base-station identification information for identifying the base station 130, when the U2N relay 110#2 is in communication range with the base station 130. When the U2U relay 110#3 is in communication range with the U2N relay 110#2 but not in communication range with the base station 130, the U2U relay 110#3 receives the first sidelink discovery message and, on the basis of the first sidelink discovery message, transmits a second sidelink discovery message, which is a sidelink discovery message containing mobile-terminal-device identification information identifying the U2N relay 110#2 and the base-station identification information. When the remote UE 110#1 is in communication range with the U2U relay 110#3 but not in communication range with the base station 130 and the U2N relay 110#2, the remote UE 110#1 receives the second sidelink discovery message and, on the basis of the second sidelink discovery message, establishes a multi-hop relay communication path, which is a communication path to communicate with base station 130 via the U2U relay 110#3 and the U2N relay 110#2. Specifically, the remote UE 110#1 switches over to a multi-hop relay communication path when it moves out from communication range with the base station 130 and into a range in which the communication with the base station 130 and the U2N relay 110#2 is impossible.

In specific, the U2U relay 110#3 includes the terminal-side communications unit 111 compatible with the standards of the fifth-generation mobile communications system and the control unit 122. The terminal-side communications unit 111 is a communication unit that receives a sidelink discovery message including base-station identification information identifying the base station 130, or a first sidelink discovery message, transmitted by the U2N relay 110#2, which is another mobile terminal device in communication range with the base station 130. On the basis of the first sidelink discovery message, the control unit 122 causes the terminal-side communications unit 111 to transmit a sidelink discovery message containing mobile-terminal-device identification information identifying the U2N relay 110#2 and base-station identification information, or a second sidelink discovery message, when the U2U relay 110#3 is in communication range of the U2N relay 110#2 but not in communication range of the base station 130.

There are some cases in which communication through the U2U relay 110#3 and the U2N relay 110#2 cannot be established. In normal handover between base stations with Uu interfaces, Random Access Channel (RACH) transmission is performed, so handover failure can be detected when a specified number of RACH transmissions is exceeded; however, since RACH transmission is not performed in the above-descried path switch, there is no procedure for recovery.

As a method to solve such a problem, for example, the UE 110 is provided with a timer for path switch.

Such a timer starts time setting and time counting when an RRC Reconfiguration message is received. When a new communication path is established and an RRC Reconfiguration Complete message is transmitted, the remote UE 110#1 stops the timer. When the set time elapses, the remote UE 110#1 can determine that communication is not possible (e.g., path switch failure) and attempt to reconnect by the Uu interface, if necessary. The remote UE 110#1 may also transmit a handover failure (HOF) to the base station 130 through the original Uu interface. As a result, the remote UE 110#1 reports that there may be some problem in the communication path subjected to a path switch attempt, and the success rate of path switch can be increased by avoiding that path in subsequent path switch on the base station 130 side.

With the timer described above, the remote UE#1 can detect a switchover error indicating a failure in communication path switchover when the switchover to the multi-hop relay communication path is not completed after a predetermined period of time from the start of the switchover to the multi-hop relay communication path. When the remote UE#1 detects a switchover error, a communication path that directly connects to the base station 130, or a direct communication path, may then established.

### MODIFICATION

A case opposite to the first embodiment can be considered, in other words, a case of path switch from multi-hop relay communication via the U2N relay and the U2U relay to direct communication via the Uu interface. Such a path switch procedure will now be described as a modification of the first embodiment.

In this modification, as in the first embodiment, the communications system 100 includes a UE 110, a base station 130, and a 5GC unit 160. The UE 110, the base station 130, and the 5GC unit 160 have the same configuration as those in the first embodiment.

FIG. 10 is a schematic diagram illustrating an example where a remote UE 110#1 in multi-hop relay communication with the base station 130 via a U2N relay 110#2 and a U2U relay 110#3 switches the path to direct communication using a Uu interface.

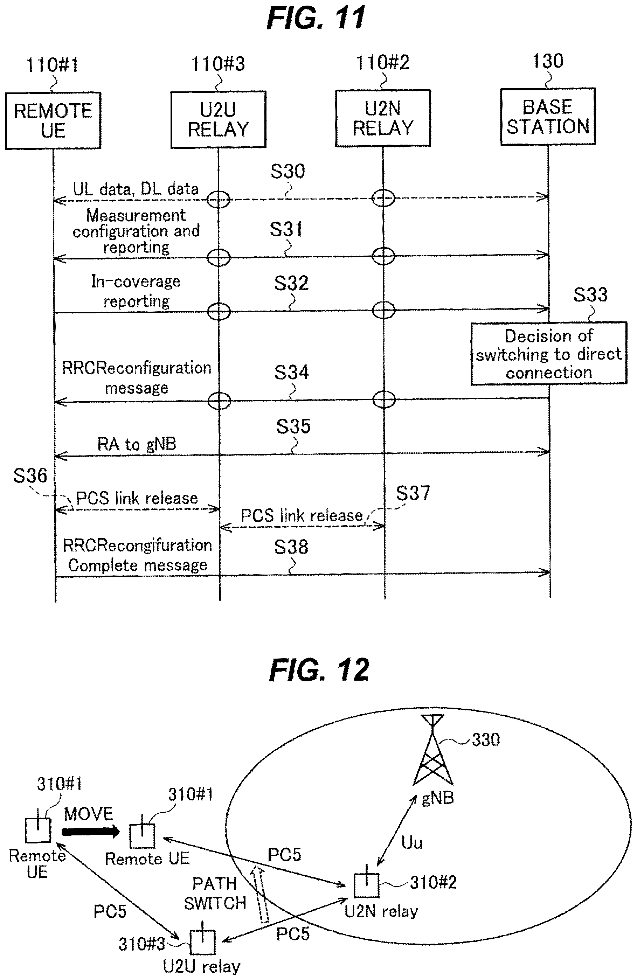

FIG. 11 is a sequence diagram illustrating the path switch procedure in the example illustrated in FIG. 10.

First, the AP unit 120 of the remote UE 110#1 is in a state of communication with the base station 130 via the terminal-side communications unit 111 and via the U2N relay 110#2 and the U2U relay 110#3 (step S30). Here, the 5GC communication unit 141 of the base station 130 communicates with the remote UE 110#1 via the station-side communications unit 131.

Next, as in step S15 in FIG. 9, the control unit 145 of the base station 130 instructs the remote UE 110#1, via the protocol processing unit 144 and the station-side communications unit 131, to measure the communication quality with the base station 130, e.g., RSRP, and the reception state of radio waves from the U2U relay 110#3, e.g., SL-RSRP; and the control unit 122 of the remote UE 110#1 reports the result of the measurement, or a communication quality report, to the base station 130 via the protocol processing unit 121 and the terminal-side communications unit 111 (step S31).

Here, it is assumed that the remote UE 110#1 has approached the base station 130 and entered the communication range. Then, for example, when the RSRP of the radio wave from the base station 130 exceeds a certain value, the control unit 122 of the remote UE 110#1 reports to the base station 130 that it is now within communication range with the base station 130 via the protocol processing unit 121 and the terminal-side communications unit 111 (step S32).

Next, the control unit 145 of the base station 130 receives a communication quality report via the protocol processing unit 144 and the station-side communication unit 131, checks the communication quality report, and determines to switch the path to direct communication using the Uu interface (step S33).

Next, the control unit 145 of the base station 130 transmits an RRC Reconfiguration message to the remote UE 110#1 via the protocol processing unit 144 and the station-side communications unit 131, to instruct path switch to direct communication using the Uu interface (step S34).

To avoid data loss during path switch, on the base station 130 side, data transmission is interrupted after the control unit 145 determines to switch the path, and on the remote UE 110#1 side, the control unit 122 interrupts data transmission after receiving the RRC Reconfiguration message. At this time, data in transmission and transmission data newly requested from upper layers are buffered and their transmission is suspended.

Next, as normal start of communication with the base station 130, the control unit 122 of the remote UE 110#1 transmits the RACH to the base station via the protocol processing unit 121 and the terminal-side communications unit 111 and performs random access processing to establish direct communication using the Uu interface (step S35).

At this time, if sidelink communication is still retained and such sidelink communication is no longer needed, the PC5 connection between the remote UE 110#1 and the U2U relay 110#3 and the PC5 connection between the U2U relay 110#3 and the U2N relay 110#2 may be released (steps S36 and S37).

As described above, a new communication path using the Uu interface is established between the remote UE 110#1 and the base station 130, and the control unit 122 of the remote UE 110#1 transmits an RRC Reconfiguration Complete message to the base station 130 through the new path via the protocol processing unit 121 and the terminal-side communications unit 111 (step S38).

In other words, in the modification, when the remote UE 110#1 moves into communication range with the base station 130, the remote UE 110#1 sends a communication quality report indicating the quality of communication with the base station 130 to the base station 130 to switch over to a communication path directly connected to the base station 130, or a direct communication path.

There are some cases in which communication using the Uu interface between the remote UE 110#1 and the base station 130 cannot be established for some reason. A T304 timer used in normal handover between base stations 130 may be used by the control unit 145 of a base station 130 to detect a path switch failure. To separate this from the handover/failover process between base stations 130, the timer for path switch monitoring described in the first embodiment may be provided and used in the remote UE 110#1. In such a case, the condition to stop the timer may be the time of a successful random access process.

### SECOND EMBODIMENT

If multiple remote UEs are present in the first embodiment, the communication paths will be concentrated on the same U2U relay or U2N relay under the same radio conditions; and thus, there is a risk straining the hardware and radio resources of the U2U relay or the U2N relay and causing performance degradation such as a reduction in transmission speed.

The second embodiment solves such problems.

As illustrated in FIG. 1, a communications system 200 according to the second embodiment includes a UE 210, a base station 230, and a 5GC unit 160.

The 5GC unit 160 of the communications system 200 according to the second embodiment is the same as the 5GC unit 160 of the communications system 100 according to the first embodiment.

As illustrated in FIG. 2, the UE 210 according to the second embodiment includes a terminal-side communications unit 111, an AP unit 120, a protocol processing unit 121, and a control unit 222.

The terminal-side communications unit 111, the AP unit 120, and the protocol processing unit 121 of the UE 210 according to the second embodiment are respectively the same as the terminal-side communications unit 111, the AP unit 120, and the protocol processing unit 121 of the UE 110 according to the first embodiment.

The control unit 222 according to the second embodiment executes the same processes as the control unit 122 according to the first embodiment, and also executes the following processes according to the second embodiment.

When the UE 210 functions as a U2U relay or a U2N relay, the control unit 222 establishes connection via sidelink communication to constantly ascertain and count the number of remote UEs providing relay functions or the number of relay UEs other than itself.

Then, when the UE 210 functions as a U2U relay or a U2N relay, the control unit 222 appends number count data indicating the number counted as described above, number count data indexing the number counted as described above, or number count data indexing the number counted as described above together with information about a surplus state of the L2 processing resource of the relay UE to a sidelink discovery message via the protocol processing unit 121 and the terminal-side communications unit 111, and transmits the sidelink discovery message. Hereafter, the above number count data is referred to as "congestion information."

When the control unit 222 receives a sidelink discovery message from another U2U relay or a U2N relay while the UE 210 is functioning as a U2U relay, the control unit 222 reads the information on reachable UEs in the message and the congestion information associated with the relay UE, and adds the read information to the sidelink discovery message to be transmitted to the base station 230.

Furthermore, when the UE 210 functions as a remote UE, the control unit 222 receives information on paths to the reachable relay UEs and the base station 230 and the congestion information associated with each relay UE in step S14 of FIG. 9, and reports the congestion information on the relay UEs on the communication path together with the path information reported to the base station 230 in step S14 of FIG 9.

As illustrated in FIG. 4, the base station 230 according to the second embodiment includes a station-side communications unit 131, a communication processing unit 140, a protocol processing unit 144, and a control unit 245.

The station-side communications unit 131, the communication processing unit 140, and the protocol processing unit 144 of the base station 230 according to the second embodiment are respectively the same as the station-side communications unit 131, the communication processing unit 140, and the protocol processing unit 144 of the base station 130 according to the first embodiment.

The control unit 245 according to the second embodiment acquires the congestion information sent from the UE 210 via the station-side communications unit 131 and the protocol processing unit 144 to ascertain the load state of the relay UE 210 on the communication path of an alternative path candidate. In this way, when the load of the relay UE 210 is high, e.g., when the congestion information indicates a value higher than a certain level, the control unit 245 does not select the communication path of the relay UE 210. In this way, resource load concentration can be avoided and efficient communication paths can be established in the second embodiment.

The control unit 245 of the base station 230 requires the UE210 that is in communication range or connected by a relay to periodically report congestion information and accumulate the obtained congestion information, so that the optimal path with low resource load can be determined not only when path switching but also when a new remote UE 210 requests connection.

The control unit 245 of the UE 210 that functions as a relay UE 210 may report congestion information directly to the base station 230 when the control unit 245 has a PDU session with the base station 230.

Also, when the UE 210 functioning as a remote UE 210 transmits and receives a sidelink discovery message to initiate normal sidelink communication with no connection to the base station 230 instead of path switch, the control unit 245 of the base station 230 can obtain congestion information. The control unit 245 of the base station 230 may determine the connection destination UE 210 or path on the basis of the obtained congestion information.

As described above, in the second embodiment, the U2N Relay 210#2 includes, in the first sidelink discovery message, data that can indicate the number of UEs 210 connected to the U2N relay 210#2, or first data. The U2U relay 210#3 includes, in the second sidelink discovery message, second data that can indicate the number of UEs 210 connected to the U2U relay 210#3 and the first data from the U2N relay 210#2. The remote UE 210#1 then sends the first and second data to the base station 230. This allows the base station 230 to determine the communication path with low resource load.

### THIRD EMBODIMENT

Since a large number of relay stages on the communication path in a multi-hop relay system increases communication delay, it is better to have the fewest number of relay stages as possible. For this reason, it is desirable to dynamically switch the path to fewer relay stages. However, many terminal devices, including relays, moving around, causes frequent path switching, and causes an increase in the amount of processing at the base station.

The third embodiment solves such a problem.

As illustrated in FIG. 1, a communications system 300 according to the third embodiment includes a UE 210, a base station 230, and a 5GC unit 160.

The 5GC unit 160 of the communications system 300 according to the third embodiment is the same as the 5GC unit 160 of the communications system 100 according to the first embodiment.

As illustrated in FIG. 2, the UE 310 according to the third embodiment includes a terminal-side communications unit 111, an AP unit 120, a protocol processing unit 121, and a control unit 322.

The terminal-side communications unit 111, the AP unit 120, and the protocol processing unit 121 of the UE 310 according to the third embodiment are respectively the same as the terminal-side communications unit 111, the AP unit 120, and the protocol processing unit 121 of the UE 110 according to the first embodiment.

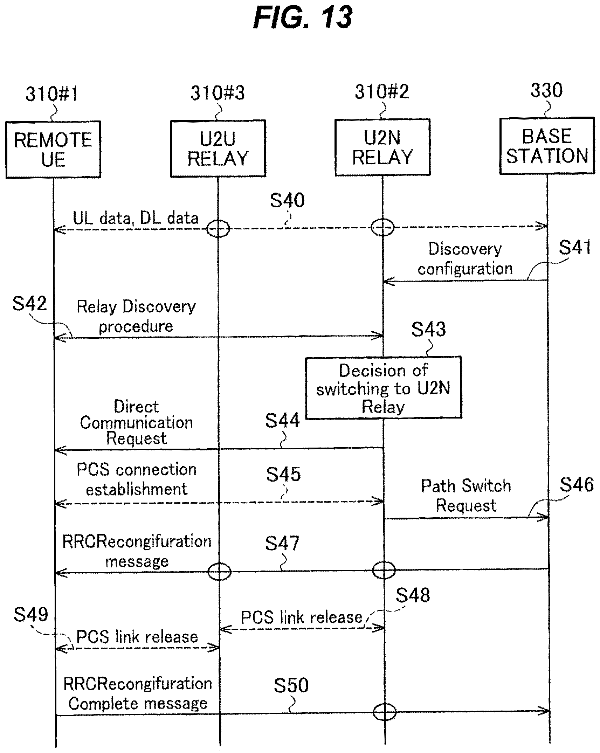

The control unit 322 according to the third embodiment executes almost the same processes as the control unit 122 according to the first embodiment, which are explained below with reference to FIG. 13.

As illustrated in FIG. 4, the base station 330 according to the third embodiment includes a station-side communications unit 131, a communication processing unit 140, a protocol processing unit 144, and a control unit 345.

The station-side communications unit 131, the communication processing unit 140, and the protocol processing unit 144 of the base station 330 according to the third embodiment are respectively the same as the station-side communications unit 131, the communication processing unit 140, and the protocol processing unit 144 of the base station 130 according to the first embodiment.

The control unit 345 according to the third embodiment executes almost the same processes as the control unit 145 according to the first embodiment, which are explained below with reference to FIG. 13.

FIG. 12 is a schematic diagram illustrating an example of reducing the number of relay stages by path switching after a remote UE 310#1 communicating with the base station 330 via a U2U relay 310#3 and a U2N relay 310#2 approaches the U2N relay 310#2 and thus is able to directly communicate with the U2N relay 310#2.

FIG. 13 is a sequence diagram illustrating the path switch procedure in the example illustrated in FIG. 12.

First, the AP unit 120 of the remote UE 310#1 is in a state of communication with the base station 330 via the terminal-side communications unit 111 and via the U2N relay 310#2 and the U2U relay 310#3 (step S40). Here, the 5GC communication unit 141 of the base station 330 communicates with the remote UE 310#1 via the station-side communications unit 131.

The control unit 345 of the base station 330 instructs the U2N relay 310#2 to perform periodic sidelink discovery (step S41).

The control unit 322 of the U2N relay 310#2 performs sidelink discovery to detect that the remote UE 310#1 has entered communication range (step S42). The control unit 322 of the U2N relay 310#2 can recognize a UE 310 newly enters communication range by retaining the results of the previously performed sidelink discovery.

The control unit 322 of the U2N relay 310#2 is aware of the remote UE 310#1 that is the end of the communication it relays, for example, through radio bearer information. In step S42, if the UE 310 that has newly entered communication range is on the list of remote UEs 310#1 that are relaying communication, the control unit 322 of the U2N relay 310#2 determines to switch the path to direct communication without the U2U relay 310#3 (step S43). In determining the path switch, the control unit 322 may consider the state of communication, e.g., SL-RSRP, with the remote UE 310#1.

Next, the control unit 322 of the U2N relay 310#2 transmits a Direct Communication Request message to the remote UE 310#1 via the protocol processing unit 121 and the terminal-side communications unit 111 (step S44) and establishes sidelink communication (step S45).

Next, the control unit 322 of the U2N relay 310#2 transmits a "path switch request" message to the base station 330 via the protocol processing unit 121 and the terminal-side communications unit 111 to request switching over to direct communication between the U2N relay 310#2 and the remote UE 310#1 (step S46).

Next, the control unit 345 of the base station 330 ascertains the path switch and, if necessary, transmits an RRC Reconfiguration message over the original communication path via the protocol processing unit 144 and the station-side communications unit 131 (step S47).

Here, the control units 322 of the U2N relay 310#2 and the U2U relay 310#3, and the control units 322 of the U2U relay 310#3 and the remote UE 310#1 may release the PC5 communications that are no longer needed (steps S48 and S49).

The control unit 322 of the remote UE 310#1 transmits an RRC Reconfiguration Complete message to the base station 330 via the protocol processing unit 121 and the terminal-side communications unit 111 and completes the path switch (step S50).

In the third embodiment, when the remote UE 310#1 moves into communication range with the U2N relay 310#2, the U2N relay 310#2 switches over from the multi-hop relay communication path to the single-hop relay communication path, which is a communication path that goes through the U2N Relay 310#2 without going through the U2U Relay 310#3.

The above procedure enables more efficient communication path selection without increasing the processing load of the base station 330 by allowing the U2N relay 310#2 to autonomously determine to execute a path switch.

Although the third embodiment is explained on the basis of the first embodiment, the operations in the second embodiment may be performed in the third embodiment.

### DESCRIPTION OF REFERENCE CHARACTERS

100, 200, 300 communications system; 110, 210, 310 UE; 111 terminal-side communications unit; 112 transmission-data buffer unit; 113 encoder unit; 114 modulating unit; 115 frequency converting unit; 116 antenna; 117 demodulating unit; 118 decoder unit; 120 AP unit; 121 protocol processing unit; 122, 222, 322 control unit; 130, 230, 330 base station; 131 station-side communication unit; 132 transmission-data buffer unit; 133 encoder unit; 134 modulating unit; 135 frequency converting unit; 136 antenna; 137 demodulating unit; 138 decoder unit; 140 communication processing unit; 144 protocol processing unit; 145, 245, 345 control unit; and 160 5GC unit.

## Claims

1. A communications system compatible with the fifth-generation mobile communication system standards, the system comprising: a base station; a first mobile terminal device; a second mobile terminal device; and a third mobile terminal device, wherein,
when the first mobile terminal device is in communication range with the base station, the first mobile terminal device transmits a first sidelink discovery message being a sidelink discovery message including base-station identification information identifying the base station,
when the second mobile terminal device is in communication range with the first mobile terminal device and not in communication range with the base station, the second mobile terminal device receives the first sidelink discovery message and, based on the first sidelink discovery message, transmits a second sidelink discovery message being a sidelink discovery message including the base station identification information and mobile-terminal-device identification information identifying the first mobile terminal device, and
when the third mobile terminal device is in communication range with the second mobile terminal device and not in communication range with the base station and the first mobile terminal device, the third mobile terminal device receives the second sidelink discovery message and, based on the second sidelink discovery message, establishes a multi-hop relay communication path being a communication path for communicating with the base station via the second mobile terminal device and the first mobile terminal device.

2. The communications system according to claim 1, wherein when the third mobile terminal device moves out of communication range with the base station into an area not in communication range with the base station and the first mobile terminal device, the third mobile terminal device switches over to the multi-hop relay communication path.

3. The communications system according to claim 2, wherein when switchover to the multi-hop relay communication path is not completed after a predetermined period of time from start of the switchover to the multi-hop relay communication path, the third mobile terminal device detects a switchover error in communication path switchover.

4. The communications system according to claim 3, wherein when the third mobile terminal device detects the switchover error, the third mobile terminal device establishes a direct communication path being a communication path directly connected to the base station.

5. The communications system according to any one of claims 1 to 3, wherein when the third mobile terminal device moves into communication range with the base station, the third mobile terminal device switches over to a direct communication path by sending a communication quality report indicating quality of communication with the base station to the base station, the direct communication path being the communication route directly connected to the base station.

6. The communications system according to any one of claims 1 to 5, wherein,
the first mobile terminal device includes first data in the first sidelink discovery message, the first data being data capable of indicating the number of mobile terminal devices connected to the first mobile terminal device,
the second mobile terminal device includes second data and the first data in the second sidelink discovery message, the second data being data capable of indicating the number of mobile terminal devices connected to the second mobile terminal device, and
the third mobile terminal device transmits the first data and the second data to the base station.

7. The communications system according to any one of claims 1 to 6, wherein when the third mobile terminal device moves into communication range with the first mobile terminal device, the first mobile terminal device switches over from the multi-hop relay communication path to a single-hop relay communication path being a communication path through the first mobile terminal device without going through the second mobile terminal device.

8. A mobile terminal device comprising:
a communications unit compatible with the fifth-generation mobile communications system standards and configured to receive a first sidelink discovery message transmitted from another mobile terminal device in communication range with a base station, the first sidelink discovery message being a sidelink discovery message including base-station identification information identifying the base station; and
a control unit configured to cause the communications unit to transmit a second sidelink discovery message based on the first sidelink discovery message when the mobile terminal device is within communication range with the another mobile terminal device and not in communication range with the base station, the second sidelink discovery message being a sidelink discovery message including the base-station identification information and mobile-terminal-device identification information identifying the another mobile terminal device.

9. A program causing a computer to function as:
a communications unit compatible with the fifth-generation mobile communications system standards and configured to receive a first sidelink discovery message transmitted from another mobile terminal device in communication range with a base station, the first sidelink discovery message being a sidelink discovery message including base-station identification information identifying the base station; and
a control unit configured to cause the communications unit to transmit a second sidelink discovery message based on the first sidelink discovery message when the mobile terminal device is within communication range with the another mobile terminal device and not in communication range with the base station, the second sidelink discovery message being a sidelink discovery message including the base-station identification information and mobile-terminal-device identification information identifying the another mobile terminal device.
